# EUROPEAN PATENT APPLICATION

(11) **EP 0 849 042 A1**
(43) Date of publication of application: **24.06.1998**
(21) Application number: 98100761.0
(22) Date of filing: 25.01.1995
(51) Int. Cl.: B24B 45/00, B24D 5/16

(54) **Positive radial location of wheels on spindles**

(30) Priority: 25.01.1994 GB 9401395
(62) Divisional of application: 95906427.0
(71) Applicant: WESTERN ATLAS U.K. LIMITED, Aylesbury, Buckinghamshire HP20 2RQ (GB)
(72) Inventor: Laycock, Michael, Keighley, West Yorkshire, BD20 7DH (GB)
(74) Representative: Nash, Keith Wilfrid

(57) **Abstract**

A method and apparatus for mounting a grinding wheel (26; 54; 78) on a spindle (10; 44; 66) is described so as to achieve positive radial location of the grinding wheel on the spindle. Retaining means (18; 36; 60; 74) is provided for balls of a ball race (20; 58; 76) around the spindle. Bolt means (34; 42; 64; 80) is operable in use to draw the grinding wheel over the balls and to tighten the balls into an interference fit between the spindle and the bore of the grinding wheel so centring the grinding wheel.

## Description

### Field of invention

This invention relates to a method of and means for effecting the positive radial location of wheels on spindles, more especially the location of grinding wheels, for example diamond and cubic boron nitride (CBN) grinding wheels, on the spindle of a grinding machine.

### Background to the invention

When diamond or CBN grinding wheels are mounted on the spindle of a grinding machine, it is essential to ensure that the location of wheel on the spindle is true. This means that the attachment should positively radially locate the wheel on the spindle so that the wheel axis is coincident with the spindle axis. Ideally an order of accuracy of less than 1 micron is required.

For the purpose of obtaining a "true" mounting, it is known to centre the grinding wheel with the aid of an internally grooved sleeve, which is self-centering on the machine spindle as the wheel is tightened into position. In practice, however, an arrangement of this type is expensive and not always effective.

It is also known from EP-A-321970 to provide apparatus for mounting a wheel on a spindle comprising a flange on the spindle against which the wheel can be axially located and a ball race engageable over a portion of the spindle on the same side of the flange on the wheel. However, in this arrangement said portion of the spindle is formed as a regular polygon, so that angular rotation of the ball race relative to the spindle causes the ball race to engage with a circular aperture in the wheel, resulting in centralisation of the wheel. The production of said regular polygon can be an expensive operation, and additionally the correct rotation of the ball race may need to be accurately monitored.

It is an object of the present invention to provide an improved and a simpler method of and means for mounting a wheel such as a grinding wheel, on a machine spindle.

### Summary of the invention

According to one aspect of the invention, there is provided a method of centralised mounting of a wheel on a spindle having a radial flange against which the wheel is clamped, the spindle including a tapering surface on the side of the flange towards which the wheel is moved for mounting, characterised by the steps of fitting around the tapering surface a plurality of uniformly matched balls, fitting to the spindle the wheel having a central aperture which forms an interference fit over the balls, the central aperture having a tapered inside surface so that relative axial movement between the wheel and the spindle causes the tapered inside surface to engage the balls and force them up the tapering surface of the spindle until an all-round interference fit is formed therebetween, and clamping the wheel to the flange to maintain the said all-round interference fit.

In accordance with the method, the progressive movement of the wheel towards the flange serves to centre the wheel on the spindle axis to an accuracy determined by the identity of the diameters of the balls forming the ball race. Since these can be manufactured to a very high tolerance, the invention allows a very simple and accurate centering of the wheel on the spindle.

According to another aspect of the invention, there is provided mounting means for effecting positive radial, centralised location of a wheel on a spindle of a machine, said wheel and spindle having portions which form parts of the mounting means and comprising a flange on the spindle, characterised by a reduced diameter end portion adjacent to the flange, a tapered region on the end portion of the spindle, means for retaining a plurality of uniformly matched balls around the tapered spindle region, and clamping means operable in use to force an aperture in the wheel over the ball race and increasingly tighten the balls thereof into an all-round interference fit between the tapered surface on the spindle and the wheel, so that the wheel becomes clamped thereon with its axis coincident with that of the spindle.

The plurality of balls are uniformly matched for diameter and roundness to provide the correct outside diameter for the ball race, such that in the fully tightened condition there is an interference fit between the wheel and the balls and the spindle. Thus, during the tightening operation, the balls roll into the positions appropriate to a true centering of the wheel on the spindle and, together with the hardened surfaces, act to absorb interference. On completing the tightening, the trueness of the fit of the wheel is affected only by the tolerance in manufacture of the wheel and the tolerance of the ball diameter.

Repeatability and true running depends upon a consistent hardness around the inside of the wheel aperture and the associated surface of the spindle end. While in theory three equally spaced balls are sufficient to locate and centre the wheel, in practice a larger number of balls are provided around the spindle end.

Although not limited thereto, the invention specifically enables the mounting of grinding wheels, for example diamond and CBN grinding wheels, on the spindles of grinding machines.

The invention also lies in a grinding machine having a drive spindle for a grinding wheel and mounting means for attaching the grinding wheel thereto as provided by the invention.

Other features of the invention are defined in the appended claims.

### Brief Description of the Drawings

The invention will now be described by way of example with reference to the accompanying drawings, in which:
Figure 1 shows a first wheel mounting in axial cross-section, not in accordance with the invention;
Figure 2 shows a second wheel mounting also not in accordance with the invention;
Figure 3 shows an embodiment of a wheel mounting in axial cross-section, in the clamped condition;
Figure 4 shows another wheel mounting not in accordance with the invention in axial cross-section, divided as in Figure 1, to illustrate the clamped and unclamped conditions; and
Figure 5 shows an enlarged detail of a ball cage as shown in Figure 4.

### Description of Embodiments

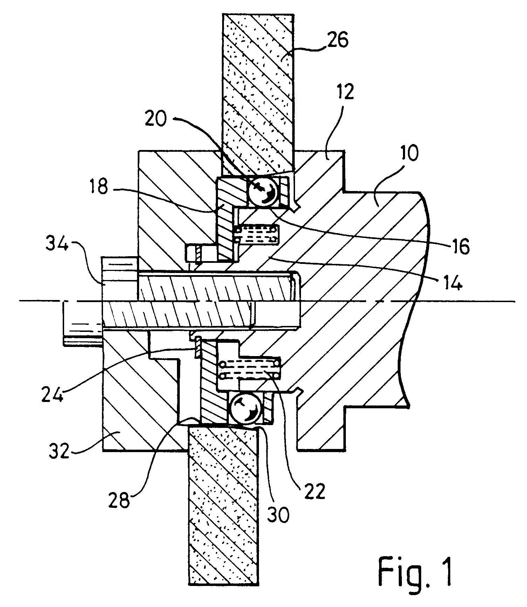

Referring to Figure 1, a grinding machine drive spindle 10 includes a radial flange 12 to provide an axial stop for a grinding wheel when fitted on the spindle, and a reduced diameter end 14 beyond the flange, for receiving the wheel. The surface 16 of the spindle end 14 is surface hardened.

Around the surface hardened spindle end 14 is fitted a ball cage 18 for retaining a plurality of balls 20 to form a ball race circularly around the spindle end 14. Typically there are 36 balls in the race and they are formed from hardened steel.

In the upper half of Figure 1, the grinding wheel 26 is shown clamped in position against the flange 12. In the lower half it is shown in the unclamped and partially demounted condition and in this condition the cage 18 is axially displaced under the action of springs 22 acting on a washer 24.

The internal surface 28 of the central aperture of the grinding wheel 26 tapers axially from an entrance 30 in one face of the wheel and is surface hardened to provide the external running surface for the ball race 20. Axially beyond the entrance region 30 the internal surface of the central aperture is cylindrical. A clamping plate 32 is forced in an axial direction by tightening centre bolt 34 so as to clamp the grinding wheel 26 between the plate 32 and the flange 12.

The action of tightening the bolt 34 also shifts the ball race and cage 18, 20 axially inwardly.

The balls 20 automatically centre the wheel on the spindle and the wheel is forced thereover, the tapered opening 30 facilitating the introduction of the wheel over the ball race and the cylindrical region of the internal aperture of the wheel producing a zero clearance, low interference fit between the balls 20 and the hardened surface 28, interference being absorbed as the wheel 26 is drawn into its final clamped position. The wheel 26 is shown clamped against the flange 12 in the upper part of the figure.

In order to achieve the desired result, the balls 20 are carefully matched as regards size, so that the outside diameter of the balls is "identical" to within a very small tolerance.

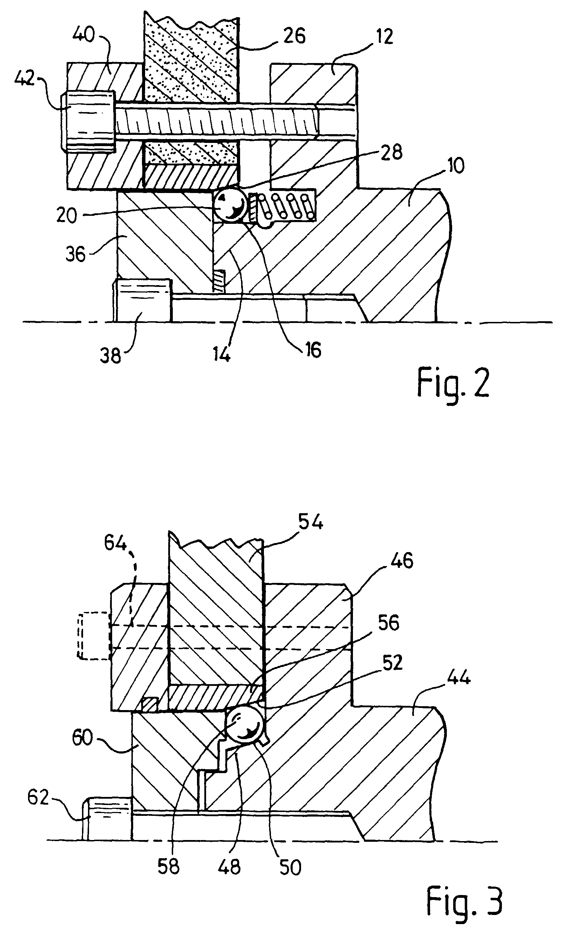

A modified arrangement is shown in Figure 2 in which similar reference numerals have been employed to indicate similar parts. Here balls 20 are retained in place by a retaining ring 36, which is secured to the spindle 10 by bolt 38. An outer ring 40 can be tightened in a similar manner to item 32, to force the balls into position, using bolts 42, there being a number of such bolts equally angularly spaced around the ring 40. The trueing effect produced during tightening is similar to that described with reference to Figure 1, and preferably the bolts 42 are tightened progressively, working around the ring.

The Figure 1 arrangement has the advantage of single point tightening.

In the arrangement of Figure 3, machine spindle 44 again has an enlarged flange 46 and reduced end diameter 48. This latter has a surface hardened tapered section 50, the angle of the taper being slightly greater than that of a taper 52 of the entrance region of the aperture in the grinding wheel 54. The latter is sleeved by a ring 56 of hardened steel or the like. A plurality of balls 58 are held in place axially by a retaining member 60 which can be tightened into position by turning the central bolt 62.

The grinding wheel 54 is in this case relatively loosely clamped to the spindle by bolts 64 at the beginning of the mounting process, and this is completed by tightening the central bolt 62. The retaining member 60 acts directly on the balls and forces true centering with a zero clearance to low interference fit between the converging hard tapered surfaces as previously described. After tightening bolt 62, the bolts 64 can be tightened to clamp the wheel in place.

In the Figure 3 arrangement, the balls are shown trapped between two tapering surfaces as opposed to between cylindrical surfaces as in Figures 1 and 2.

As in the first described embodiment, the arrangements of Figures 2 and 3 also require exactly matched balls, selected as to size and roundness, to provide the appropriate and correct outside diameter of the ball race to achieve the accurate centering of the wheel on the spindle.

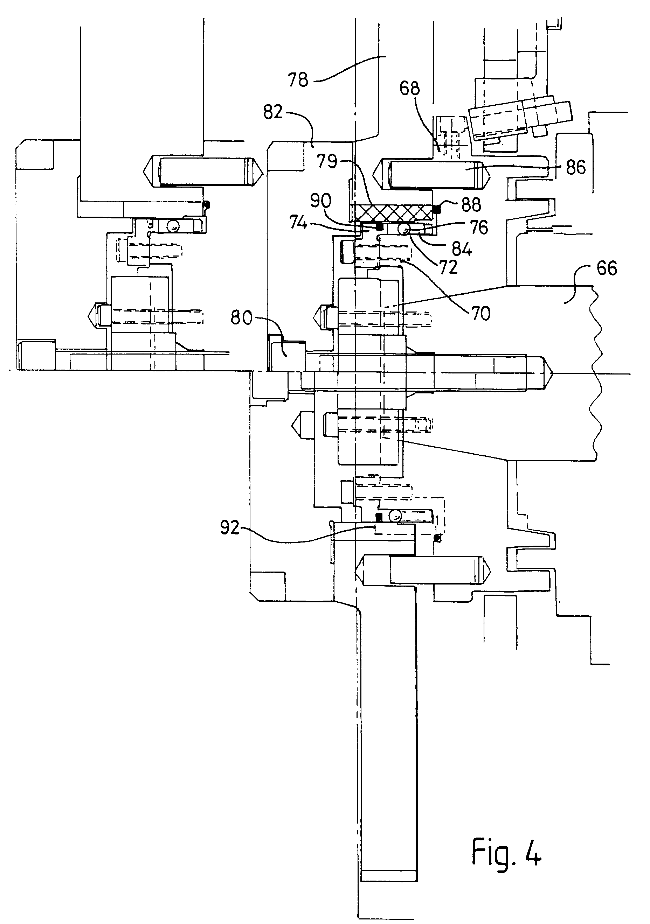

In the arrangement of Figure 4, a machine spindle 66 similarly has a flange 68 and a reduced diameter end 70 which is surface hardened to provide a very hard circumferential surface 72.

Supported on the hardened surface 72 is a ball race comprising a cage 74 containing 36 balls 76. The assembly is shown in its unclamped condition in the lower part of Figure 4 and in its clamped condition in the upper part of the figure.

The ball cage 74 retains the balls 76 in position so as to centre the grinding wheel 78. The latter is sleeved internally with a hardened ring 79 typically of hardened steel or the like.

A central bolt 80 allows plate 82 to be clamped directly onto the grinding wheel 78. As the grinding wheel 78 is shifted to the right by turning the bolt 80, the balls 76 are also forced to the right against springs such as 84. As previously described, this centres the grinding wheel 78 about the spindle 66.

Drive pins 86 extend between the wheel and the flange to transmit drive between the flange and the grinding wheel 78.

Seals 88, 90 are provided to seal the gap between the ball cage 74 and the grinding wheel 78 and any gap between the grinding wheel 78 and the flange 68. The seals 88, 90 prevent the entry of coolant and/or dirt into the space containing the balls 76. This protects the balls and extends the life of the ball race.

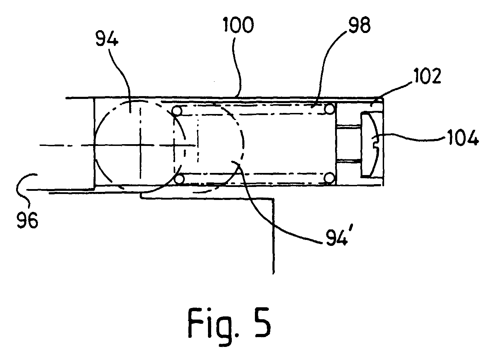

Figure 5 is an enlarged detail of the area 92 in Figure 4. Each ball 94 is moveable between its position shown by 94 and that denoted by 94'. Tightening of the bolt 80 as shown in Figure 4, causes axial movement of the ball cage 96 so as to move the balls from their unclamped condition 94 to their clamped position at 94'. Springs 98 locate the balls 94 within the slots 100 and a cylindrical end stop 102 and screw 104 serve to retain the balls and springs in their slots.

In Figure 4 the inner end of the hardened steel ring 79 may be tapered or simply formed with an enlarged diameter region as shown simply to facilitate the fitting of the ring over the ball race. The action of tightening the clamping plate 82 first of all forces the balls against their springs and then creates an interference fit as the balls are forced into the smaller diameter cylindrical region of the ring 79 to lie between the two cylindrical surfaces of the ring 79 and the spindle end.

## Claims

1. A method of centralised mounting of a wheel on a spindle (44) having a radial flange (46) against which the wheel (54) is clamped, the spindle including a tapering surface (50) on the side of the flange towards which the wheel is moved for mounting, characterised by the steps of fitting around the tapering surface a plurality of uniformly matched balls (58), fitting to the spindle the wheel having a central aperture which forms an interference fit over the balls, the central aperture having a tapered inside surface (52) so that relative axial movement between the wheel and the spindle causes the tapered inside surface to engage the balls (58) and force them up the tapering surface of the spindle until an all-round interference fit is formed therebetween, and clamping the wheel to the flange (46) to maintain the said all-round interference fit.

2. Mounting means for effecting positive radial, centralised location of a wheel (54) on a spindle (44) of a machine, said wheel and spindle having portions which form parts of the mounting means and comprising a flange (46) on the spindle, characterised by a reduced diameter end portion (48) adjacent to the flange, a tapered region (50) on the end portion of the spindle, means (60) for retaining a plurality of uniformly matched balls (58) around the tapered spindle region, and clamping means operable in use to force an aperture in the wheel over the ball race and increasingly tighten the balls thereof into an all-round interference fit between the tapered surface (50) on the spindle (44) and the wheel (54), so that the wheel becomes clamped thereon with its axis coincident with that of the spindle.

3. Mounting means according to claim 2, wherein the aperture in the wheel tapers from an enlarged end (52) thereof towards a cylindrical section thereof.

4. Mounting means according to claim 2 or claim 3, wherein the opposed faces (50, 52) of the wheel aperture and the spindle are surface hardened to provide resistance to wear.

5. Mounting means according to any one of claims 2 to 4, wherein the clamping means includes bolt means for clamping the parts together and which acts directly between a clamping plate (32) and the spindle end.

6. Mounting means according to any one of claims 3 to 5, wherein the spindle taper (50) is at a steeper angle than that of the taper (52) in the wheel aperture, and the clamping means comprises a ring member (60) which acts as an end closure for the balls on the spindle end.

7. Mounting means according to any one of claims 4 to 6, wherein the wheel aperture includes an inner ring (56) of hardened steel or the like.

8. Mounting means according to any one of claims 2 to 7, wherein the wheel is a grinding wheel.

9. A grinding machine having a drive spindle for a grinding wheel and mounting means for attaching the grinding wheel thereto according to any one of claims 2 to 7.
